Europäisches Patentamt

European Patent Office

Office européen des brevets

(19)

(11) **EP 1 244 242 B1**

(12) **FASCICULE DE BREVET EUROPEEN**

(45) Date de publication et mention
de la délivrance du brevet:
**29.10.2003 Bulletin 2003/44**

(51) Int Cl.⁷: **H04L 5/02**, H04L 27/26

(21) Numéro de dépôt: **02290592.1**

(22) Date de dépôt: **08.03.2002**

(54) **Egalisation à minimisation de l'erreur quadratique moyenne globale**

Entzerrung mit globaler minimierung des mittleren quadratischen Fehlers

Global MMSE equalisation

(84) Etats contractants désignés:
**AT BE CH CY DE DK ES FI FR GB GR IE IT LI LU MC NL PT SE TR**

(30) Priorité: **22.03.2001 FR 0104049**

(43) Date de publication de la demande:
**25.09.2002 Bulletin 2002/39**

(73) Titulaire: **Mitsubishi Electric Information Technology Centre Europe B.V.**
**1119 NS Schiphol Rijk (NL)**

(72) Inventeur: **Castelain, Damien,**
**c/o Mitsubishi Electricite**
**35700 Rennes (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
- **H LARD ET AL.: "Linear MMSE detection technique for MC-CDMA" ELECTRONICS LETTERS, vol. 36, no. 7, 30 mars 2000 (2000-03-30), pages 665-666, XP006015082 Stevenage, GB ISSN: 0013-5194**
- **VOORMAN ET AL.: "Performance evaluation of the decorrelating detector for DS-CDMA systems over multipath Rayleigh fading channels with AWGN" IEEE INTERNATIONAL SYMPOSIUM ON PERSONAL, INDOOR AND MOBILE RADIO COMMUNICATIONS, 8 - 11 septembre 1998, pages 228-232, XP002186690 New York, US ISBN: 0-7803-4872-9**
- **MOTTIER, CASTELAIN: "A spreading sequence allocation procedure for MC-CDMA transmission systems" IEEE VEHICULAR TECHNOLOGY CONFERENCE, 24 - 28 septembre 2000, pages 1270-1275 vol.3, XP002186691 Piscataway, US ISBN: 0-7803-6507-0**
- **DAS ET AL: "Computationally efficient multiuser detectors" IEEE INTERNATIONAL SYMPOSIUM ON PERSONAL, INDOOR AND MOBILE RADIO COMMUNICATIONS, 1 - 4 septembre 1997, pages 62-67, XP002186693 New York, US ISBN: 0-7803-3871-5**

**Description**

La présente invention concerne une méthode et un dispositif d'égalisation pour voie descendante d'un système de télécommunication de type MC-CDMA. Plus particulièrement, la présente invention concerne une méthode et un dispositif d'égalisation de type GMMSE.

L'accès multiple à répartition par codes sur porteuses multiples (MC-CDMA pour *Multi-Carrier Code Division Multiple Access*) combine la modulation OFDM (*Orthogonal Frequency Division Multiplex*) et la technique d'accès multiple CDMA. Cette technique d'accès multiple a été proposée pour la première fois par N. Yee et al. dans l'article intitulé « Multicarrier CDMA in indoor wireless radio networks » paru dans Proceedings of PIMRC '93, Vol. 1, pages 109-113, 1993. Les développements de cette technique ont été passés en revue par S. Hara et al. dans l'article intitulé « Overview of multicarrier CDMA » publié dans IEEE Communication Magazine, pages 126-133, Décembre 1997.

Contrairement à la méthode DS-CDMA (*Direct Séquence Code Division Multiple Access*) dans laquelle le signal de chaque utilisateur est multiplié dans le domaine temporel pour étaler son spectre fréquentiel, la signature multiplie ici le signal dans le domaine fréquentiel, chaque élément de la signature multipliant le signal d'une sous-porteuse différente.

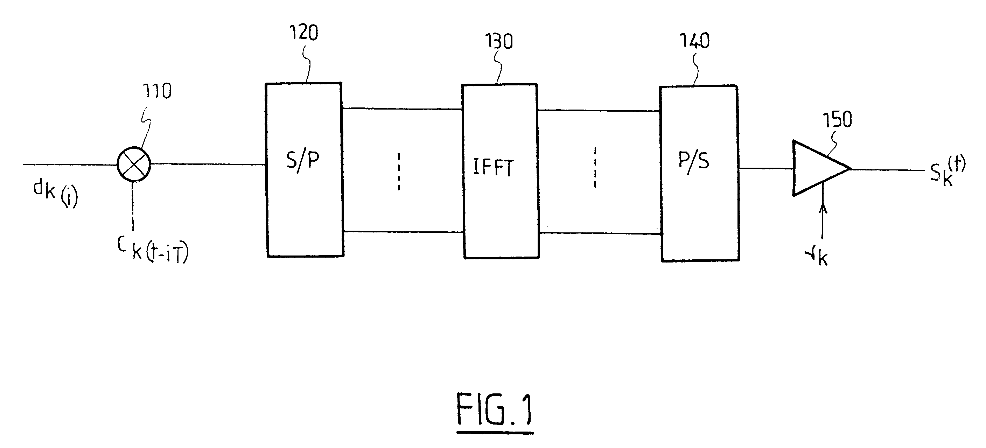

Plus précisément la Fig. 1 représente la structure d'un émetteur MC-CDMA pour un utilisateur $k$ donné. Soit $d_k(i)$ le $i$ème symbole à émettre de l'utilisateur $k$ où $d_k(i)$ appartient à l'alphabet de modulation. Le symbole $d_k(i)$ est tout d'abord multiplié en 110 par une séquence d'étalement ou signature de l'utilisateur, notée $c_k(t)$, constituée de $N$ « chips », chaque « chip » étant de durée $T_c$, la durée totale de la séquence d'étalement correspondant à une période symbole $T$. Les résultats de la multiplication du symbole $d_k(i)$ par les différents « chips » sont convertis par le convertisseur série/ parallèle 120 en un bloc de $L$ symboles, où $L$ est en général un multiple de $N$. Nous considèrerons, pour des raisons de simplification de présentation, que $L=N$. Le bloc de $L$ symboles est ensuite soumis à une transformée de Fourier rapide inverse (IFFT) dans le module 130 avant d'être transmis au convertisseur parallèle / série 140. Afin d'éviter l'interférence inter-symbole, un intervalle de garde, de longueur supérieure à la durée de la réponse impulsionnelle du canal de transmission, est adjoint au symbole MC-CDMA. Cet intervalle est obtenu par l'adjonction (non représentée) d'un suffixe choisi identique au début dudit symbole. Le symbole ainsi obtenu est amplifié en 150 avant d'être transmis sur le canal de l'utilisateur. On voit donc que la méthode MC-CDMA s'analyse en un étalement dans le domaine spectral (avant IFFT) suivi d'une modulation OFDM.

En pratique, une station de base transmet les données pour un utilisateur $k$ sous forme de trames de $I$ symboles, chaque symbole $d_k(i)$ étant étalé par une signature réelle $c_k(t)$ de durée égale à la période symbole $T$, telle que $c_k(t)=0$ si $t\notin[0,T[$. Le signal modulé à l'instant $t=i.T+\ell.T_c$ peut alors s'écrire, si l'on omet les intervalles de garde entre symboles MC-CDMA :

$$S_k(t)=\sum_{i=0}^{I-1}\sum_{\ell=0}^{L-1}v_k.c_k(\ell.T_c).d_k(i).\exp(j.2\pi\ell/L) \qquad (1)$$

où $v_k$ est l'amplitude du signal transmis par l'utilisateur $k$, supposée constante pour un bloc de transmission.

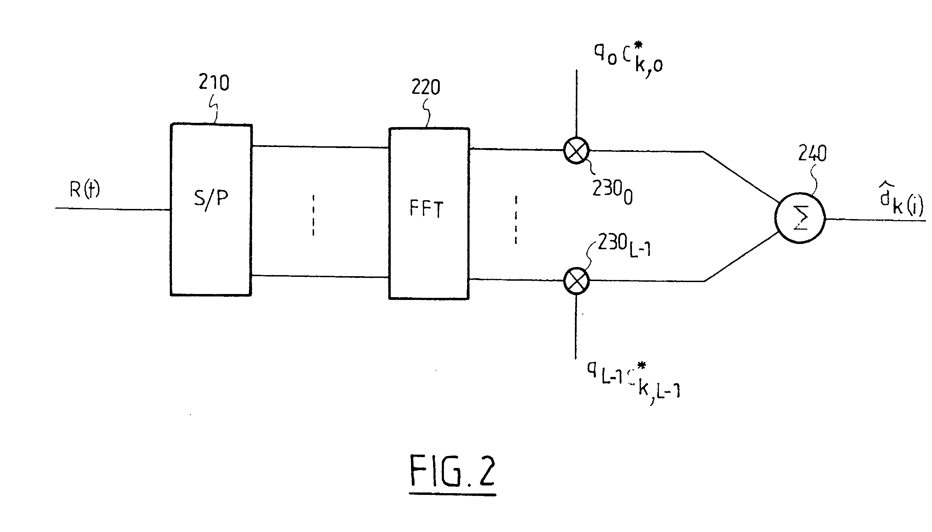

Un récepteur MC-CDMA pour un utilisateur $k$ donné a été illustré schématiquement en Fig. 2.

Le signal reçu démodulé est échantillonné à la fréquence « chip » et les échantillons appartenant à l'intervalle de garde sont supprimés (suppression non représentée). Le signal obtenu peut s'écrire :

$$R(t)=\sum_{k=0}^{K-1}\sum_{i=0}^{I-1}\sum_{\ell=0}^{L-1}h_{k\ell}(i).v_k.c_{k\ell}.d_k(i).\exp(j.2\pi\ell/L)+b(t) \qquad (2)$$

où $K$ est le nombre d'utilisateurs, $c_{k\ell}=c_k(\ell.T_c)$,$h_{k\ell}(i)$ traduit la réponse du canal de l'utilisateur $k$ à la fréquence de la sous-porteuse $\ell$ du symbole MC-CDMA émis au temps $i.T$ et où $b(t)$ est le bruit reçu.

Si l'on considère la voie descendante, les canaux de transmission ont des caractéristiques identiques et l'on peut écrire $h_{k\ell}=h_\ell$. On se limitera par la suite à l'étude de la voie descendante.

Les échantillons obtenus par échantillonnage à la fréquence « chip » sont parallélisés dans un convertisseur série/ parallèle 210 avant de subir une FFT dans le module 220. Les échantillons dans le domaine fréquentiel, en sortie de 220, sont égalisés et désétalés par la signature de l'utilisateur $k$ . Pour ce faire, les échantillons du domaine fréquentiel sont multipliés par les coefficients $q_\ell.c_{k\ell}$ dans les multiplieurs $230_0$,.., $230_{L-1}$, puis sommés en 240 pour fournir un symbole de sortie $d_k(i)$.

Différentes possibilités d'égalisation ont été envisagées dans l'état de la technique :

- la combinaison MRC (*Maximum Ratio Combining*) définie par l'emploi des coefficients $q_\ell = h_\ell^*$ où .* est l'opération de conjugaison;
- la combinaison EGC (*Equal Gain Combining*) définie par l'emploi des coefficients $q_\ell = e^{-j\varphi\ell}$ où $h_\ell = \rho_\ell . e^{j\varphi\ell}$ ;
- le forçage à zéro ZF *(Zéro Forcing)* où $q_\ell = h_\ell^{-1}(i)$;
- le forçage à zéro ZF avec seuil (*Th*) où $q_\ell = h_\ell^{-1}(i)$ si $|h_\ell(i)| < Th$ et $q_\ell = 0$ (ou $q_\ell = e^{-j\varphi\ell}$ ) sinon ;
- l'algorithme de minimisation de l'erreur quadratique moyenne MMSE (*Minimum Mean Square Error)* sur chacune des porteuses : $q_\ell = \dfrac{h_\ell^*}{|h_\ell|^2 + \sigma^2}$ où $\sigma^2$ est la variance du bruit sur la porteuse.

On rappelle qu'en MC-CDMA , la présence d'une période de garde permet de négliger l'interférence inter-symbole. L'égalisation peut être donc simplement réalisée au moyen d'une simple multiplication par un coefficient complexe, porteuse par porteuse.

Le récepteur illustré en Fig. 2 décode les données d'un utilisateur *k* sans prendre en compte l'interférence due aux autres utilisateurs. Il est dénommé pour cette raison mono-utilisateur ou SU (*Single User*).

Les techniques de détection multi-utilisateur sont connues notamment dans les systèmes de télécommunication CDMA. Elles ont pour caractéristique commune de prendre en compte les interférences générées par les autres utilisateurs.

Une technique de détection multi-utilisateur ou MUD (*Multi User Detection*) pour MC-CDMA a été présentée dans l'article de J-Y. Beaudais, J.F. Hélard et J. Citerne intitulé « Linear MMSE detection technique for MC-CDMA » publié dans Electronics Letters, Vol. 36, N°7, pages 665-666, le 30 Mars 2000. La méthode d'égalisation proposée n'opère plus porteuse à porteuse mais symbole MC-CDMA par symbole MC-CDMA, en prenant en compte l'ensemble des porteuses. Elle est appelée pour cette raison égalisation GMMSE (*Global Minimum Mean Square Error)* ou, de manière équivalente, égalisation M-MMSE (*Matrix Minimum Mean Square Error*). Elle a pour but de minimiser l'erreur quadratique moyenne entre les symboles estimés $d_k(i)$ et les symboles transmis $d_k(i)$.

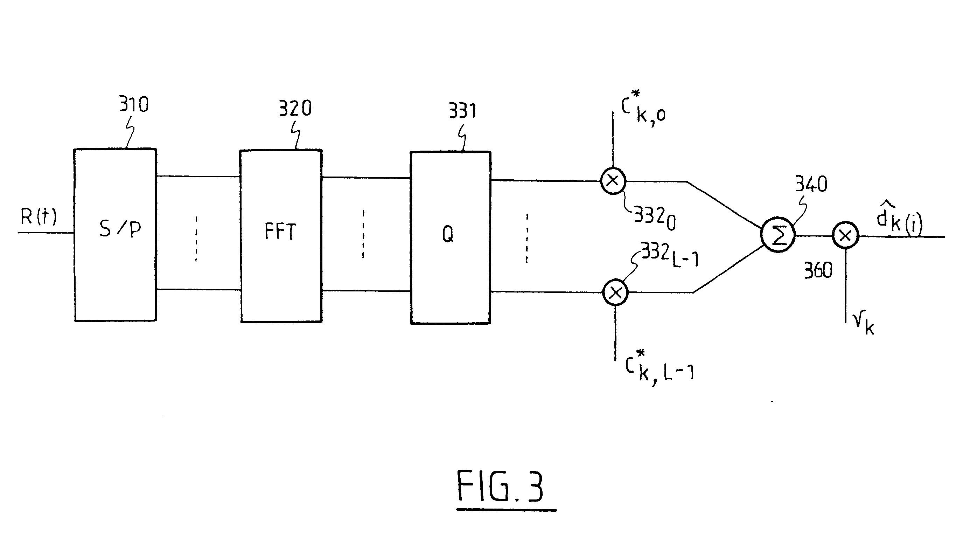

Un récepteur MC-CDMA à égalisation GMMSE pour un utilisateur *k* (encore appelé dans ce cas *per user* MMSE) a été représenté en Fig. 3. Il diffère de celui de la Fig. 2 en ce que l'égalisation est réalisée au moyen d'une multiplication 331 par une matrice **Q** des signaux des différentes porteuses. Le signal désétalé obtenu en sortie du sommateur 340 est ensuite multiplié par le niveau $\nu_k$ d'émission de l'utilisateur *k* considéré pour fournir un symbole estimé $d_k(i)$.

Comme montré dans l'article précité, la matrice **Q** peut être obtenue en appliquant la théorie du filtrage de Wiener, sous la forme :

$$Q = H^H (AA^H + \sigma_b^2 . I_N)^{-1} \qquad (3)$$

avec **A=HCV** où **H** est la matrice diagonale NxN représentant la réponse fréquentielle du canal aux différentes sous-porteuses, **C** est la matrice NxN dont les colonnes sont les séquences de code des différents utilisateurs (que nous appellerons simplement par la suite « codes »), **V** est la matrice diagonale NxN dont les éléments $\nu_i$ sont les niveaux d'émission des différents utilisateurs, $\sigma_b^2$ est la variance du bruit et $I_N$ est la matrice identité de taille NxN. Le symbole .$^H$ désigne le transposé conjugué. Notons qu'en général, on ne procède pas à l'inversion matricielle mais on résout le système d'équations linéaires correspondant.

Comme l'indique (3), l'opération d'égalisation passe par le calcul de la matrice $AA^H$ ainsi que l'inversion de la matrice $AA^H + \sigma_b^2 . I_N$ (ou de manière équivalente la résolution d'un système linéaire de rang N). Ces calculs consomment des ressources du terminal mobile et, ce, d'autant qu'ils doivent être effectués fréquemment, notamment en cas de variations rapides du canal de transmission. Or, l'on sait que les ressources des terminaux constituent la partie critique d'un système de télécommunication mobile.

Le problème à la base de la présente invention est de proposer une méthode d'égalisation GMMSE pour voie descendante d'un système de télécommunication MC-CDMA qui ne mobilise pas d'importantes ressources calculatoires.

Le problème est résolu par l'invention, définie comme une méthode égalisation pour voie descendante d'un système de télécommunication transmettant des symboles MC-CDMA sur une pluralité de fréquences porteuses, système dans lequel une pluralité de liaisons est établie entre un émetteur et une pluralité de récepteurs pour transmettre une pluralité de signaux codés, chaque liaison utilisant un code d'accès distinct parmi *N* codes possibles, le produit conjugué de deux codes possibles étant proportionnel à un code possible ou à son conjugué, ladite méthode comprenant, pour au moins un récepteur, une étape de calcul d'une matrice (**B, E**) caractéristique de ladite pluralité de liaisons, ladite étape de calcul calculant d'abord les éléments d'une ligne ou d'une colonne de la matrice caractéristique et déduisant les autres lignes ou les autres colonnes au moyen d'une permutation desdits éléments.

Selon un premier mode de réalisation, la matrice caractéristique est le produit $\mathbf{E=C|V|^2C^H}$ où $\mathbf{C}$ est la matrice des codes possibles, $\mathbf{C^H}$ est la transposée conjuguée de $\mathbf{C}$, $\mathbf{V=Diag}(v_0,..,v_{N-1})$ où les coefficients $v_i$ sont les niveaux d'émission, réels ou estimés, des signaux codés au moyen desdits $N$ codes possibles.

Avantageusement, elle comprend une seconde étape de calcul de la matrice $\Lambda\mathbf{=HEH^H}+\sigma_b^2\mathbf{.I_N}$ où $\mathbf{I_N}$ est la matrice unité de taille $NxN$, $\sigma_b^2$ est la variance du bruit, $\mathbf{H=Diag}(h_0,..,h_{N-1})$ et où les coefficients $h_i^b$ caractérisent la réponse du canal de transmission, entre ledit émetteur et ledit récepteur, aux différentes fréquences porteuses. Avantageusement encore, elle comprend une troisième étape de calcul de $\mathbf{D=A^H\Lambda^{-1}Y}$ où $\mathbf{D}$ est le vecteur des symboles estimés sur les différentes liaisons, $\mathbf{A=HCV,}$ $\mathbf{Y}$ est le vecteur reçu des composantes d'un symbole MC-CDMA sur les différentes fréquences porteuses.

Selon un second mode de réalisation, la matrice caractéristique est le produit $\mathbf{B=C^H|H|^2C}$ où $\mathbf{C}$ est la matrice des codes possibles, $\mathbf{C^H}$ est la transposée conjuguée de $\mathbf{C}$, $\mathbf{H=Diag}(h_0,..,h_{N-1})$ où les coefficients $h_i$ caractérisent la réponse du canal, entre ledit émetteur et ledit récepteur, aux différentes fréquences porteuses.

Avantageusement, elle comprend une seconde étape de calcul de la matrice $\Omega\mathbf{=V^HBV}+\sigma_b^2\mathbf{.I_N}$ où $\mathbf{I_N}$ est la matrice unité de taille $NxN$, $\sigma_b^2$ est la variance du bruit, $\mathbf{V=Diag}(v_0,..,v_{N-1})$ où les coefficients $v_i$ sont les niveaux d'émission, réels ou estimés, des signaux codés au moyen desdits N codes possibles. Avantageusement encore, elle comprend une troisième étape de résolution d'un système d'équations linéaires $\Omega\mathbf{D=A^HY}$ où $\mathbf{A=HCV}$, $\mathbf{Y}$ est le vecteur reçu des composantes d'un symbole MC-CDMA sur les différentes fréquences porteuses et où $\mathbf{D}$ est le vecteur des symboles estimés sur les différentes liaisons.

Selon une variante, on sélectionnera à partir les niveaux d'émission, réels ou estimés, des signaux codés au moyen desdits $N$ codes possibles, un sous-ensemble de codes parmi les $N$ codes possibles. Dans ce cas, $P$ codes parmi $N$ ayant été sélectionnés, la matrice $\mathbf{V=Diag}(v_0,..,v_{N-1})$, où les $v_i$ sont les niveaux estimés ou réels, pourra être réduite à une matrice $\mathbf{V'}$ de taille $PxP$ ne comportant plus que les niveaux associés aux dits codes sélectionnés et l'étape de calcul de la matrice caractéristique sera suivie d'une seconde étape de calcul de la matrice $\Omega\mathbf{'=V'^HB'V'}+\sigma_b^2\mathbf{.}$ $\mathbf{I_P}$ où B' est une matrice de taille $PxP$ obtenue en réduisant $\mathbf{B}$ aux $P$ lignes et $P$ colonnes correspondant aux codes sélectionnés, $\sigma_b^2$ est la variance du bruit sur chaque porteuse et $\mathbf{I_P}$ la matrice unité de taille $PxP$.

Avantageusement, on effectuera une égalisation des symboles MC-CDMA porteuse par porteuse du vecteur des composantes d'un symbole MC-CDMA sur les différentes fréquences porteuses suivie d'un filtrage adapté à chacun des N codes possibles. Les niveaux d'émission des signaux codés au moyen desdits N codes possibles seront alors estimés en effectuant un calcul de module en sortie dudit filtrage adapté.

Lorsque une troisième étape de résolution d'un système d'équations linéaires $\Omega\mathbf{'\hat{D}'=V'^H\hat{Z}'}$ où $\mathbf{\hat{Z}'}$ est la réduction d'un vecteur $\mathbf{\hat{Z}}$ aux $P$ composantes correspondant aux codes sélectionnés où $\mathbf{\hat{Z}}$ est le résultat de l'égalisation porteuse par porteuse et où $\mathbf{\hat{D}'}$ est le vecteur des symboles estimés sur les différentes liaisons utilisant lesdits codes sélectionnés.

On pourra choisir la matrice $\mathbf{C}$ des codes possibles tels que ses éléments $c_{k,i}$ vérifient une relation du type $c_{k,i}^*$, $c_{k,j}=\lambda_{ij}.c_{k,f(i,j)}$ ou $\lambda_{ij}.c_{k,f(i,j)}^*$ où $f(i,j)$ est un indice compris entre 0 et $N$-1 dépendant de $i$ et $j$ et $\lambda_{ij}$ est un nombre complexe. Si la matrice $\mathbf{C}$ des codes possibles est une matrice d'un code de Hadamard ou de Hadamard tourné, on calculera une ligne ou une colonne de la matrice caractéristique grâce à une transformée de Hadamard. De même, si la matrice $\mathbf{C}$ des codes possibles est une matrice d'un code de Fourier ou de Fourier tourné, on calculera une ligne ou une colonne de la matrice caractéristique grâce à une FFT.

La présente invention est également définie par un dispositif d'égalisation pour un récepteur de système de télécommunication de type MC-CDMA comprenant des moyens pour mettre en oeuvre la méthode d'égalisation telle qu'exposée ci-dessus.

La présente concerne enfin un récepteur pour système de télécommunication de type MC-CDMA, caractérisé en ce qu'il comprend un tel dispositif d'égalisation.

Les caractéristiques de l'invention mentionnées ci-dessus, ainsi que d'autres, apparaîtront plus clairement à la lecture de la description suivante faite en relation avec les figures jointes, parmi lesquelles :

La Fig. 1 représente de manière schématique la structure d'un émetteur MC-CDMA connu de l'état de la technique ;
La Fig. 2 représente de manière schématique la structure d'un récepteur MC-CDMA mono-utilisateur connu de l'état de la technique;
La Fig. 3 représente de manière schématique la structure d'un récepteur MC-CDMA utilisant une égalisation GMMSE, connu de l'état de la technique;
La Fig. 4 représente un module d'évaluation de niveaux d'émission ;
La Fig. 5 représente de manière schématique un dispositif d'égalisation selon un premier mode de réalisation de l'invention ;
La Fig. 6 représente de manière schématique un dispositif d'égalisation selon un second mode de réalisation de l'invention ;
La Fig. 7 représente de manière schématique un dispositif d'égalisation selon un troisième mode de réalisation de l'invention

Nous nous plaçons à nouveau dans le contexte d'un système MC-CDMA utilisant une méthode d'égalisation GMMSE. Le signal MC-CDMA après l'étape de FFT (c'est-à-dire le signal en sortie du module 320 de la Fig. 3) peut s'écrire sous la forme d'un vecteur **Y** de dimension N dont les composantes correspondent aux différentes porteuses. En reprenant les notations ci-dessus (mais en omettant, par souci de simplification, l'indice temporel $i$), on peut exprimer **Y** en fonction du vecteur **D** des symboles $d_k$ transmis à destination des différents utilisateurs :

$$Y=HCVD+b=AD+b \tag{4}$$

où **A=HCV** et où **b** est le vecteur des composantes de bruit.

Plus précisément, $\mathbf{D}=(d_0,...,d_{N-1})^T$ représente le vecteur des symboles émis à destination des différents utilisateurs. La matrice diagonale $\mathbf{V}=\mathbf{Diag}(v_0, ..., v_{N-1})$ représente les niveaux d'émission. La matrice **C** est la matrice des $N$ codes possibles. Plus précisément, la $i^{ème}$ colonne de **C** correspond à la séquence du $i^{ème}$ code. Par exemple, cette matrice peut être une matrice de Walsh-Hadamard, pour laquelle un algorithme de transformée rapide existe. La matrice diagonale **H** représente la réponse fréquentielle du canal aux différentes sous-porteuses, soit $\mathbf{H}=\mathbf{Diag}(h_0, h_1, ..., h_{N-1})$. On supposera par la suite que cette matrice est connue. Des techniques existent pour l'estimation de la matrice de réponse fréquentielle, par exemple s'appuyant sur l'insertion de pilotes de référence, comme décrit dans la demande française n°0011834 déposée le 14.9.00 au nom de la demanderesse et incluse ici par référence.

A la réception le vecteur **Y** fait l'objet de l'égalisation GMMSE par la matrice **Q** donnée par (3). Si $\hat{D}$ est le vecteur des symboles estimés pour les différents utilisateurs, obtenus par désétalement :

$$\hat{D}=V^H C^H QY=A^H(AA^H+\sigma_b^2.I_N)^{-1}Y \tag{5}$$

On peut montrer (voir annexe) que l'expression (5) est équivalente à :

$$\hat{D}=(A^H A+\sigma_b^2.I_N)^{-1}A^H Y \tag{6}$$

Comme on le verra plus loin, il est possible d'estimer les différents niveaux d'émission et donc la matrice **V**. Connaissant la matrice de réponse fréquentielle **H** et la matrices des codes **C,** on peut en déduire **A** (et $\mathbf{A^H}$) et, grâce à la formule (5) ou (6), obtenir $\hat{D}$ .

La variance du bruit $\sigma_b^2$ peut être évaluée, quant à elle, de manière classique, grâce à des signaux pilotes servant à l'estimation du canal de transmission. Il est également possible d'utiliser une valeur moyenne « typique ».

La matrice $\mathbf{A^H A}$ dans (6) peut se réécrire sous la forme:

$$A^H A=V^H(C^H H^H HC)V=V^H(C^H|H|^2 C)V \tag{7}$$

De même, la matrice $\mathbf{AA^H}$ dans (5) peut s'écrire sous la forme :

$$AA^H=HCVV^H C^H H^H=H(C|V|^2 C^H)H^H \tag{8}$$

L'idée générale de l'invention est que, pour la plupart des codes couramment utilisés, le calcul de la matrice $\mathbf{B=C^H|H|^2 C}$ dans (7) ou de la matrice $\mathbf{E=C|V|^2 C^H}$ dans (8) peut être considérablement simplifié.

Supposons tout d'abord que le code utilisé soit un code de Walsh-Hadamard (WH). On rappelle que le code WH peut être généré comme les colonnes d'une matrice $\mathbf{C}_{2p}$ obtenue par récurrence:

$$\mathbf{C}_{2p}=\begin{bmatrix} \mathbf{C}_p & \mathbf{C}_p \\ \mathbf{C}_p & -\mathbf{C}_p \end{bmatrix} \text{ et } \mathbf{C}_1=[1] \tag{9}$$

La matrice est réelle, symétrique, et égale à sa propre inverse. De plus, les séquences sont orthogonales.

Les éléments de **C** peuvent s'exprimer sous la forme : $c_{ij}=(-1)^{\langle ij \rangle}$ où $\langle i, j \rangle$ est le produit scalaire des représentations binaires de $i$ et $j$ :

$$\langle i,j \rangle = \sum_k i_k j_k$$

On en déduit la propriété suivante :

$$c^*_{ki}c_{kj}=c_{k,i \oplus j} \tag{10}$$

où $i \oplus j$ représente l'addition bit à bit des entiers $i$ et $j$. En effet :

$$\sum_n i_n k_n + \sum_n j_n k_n = \sum_n (i_n+j_n)k_n = \sum_n (i \oplus j)_n k_n \text{ et donc } \langle k,i \rangle + \langle k,j \rangle = \langle k, i \oplus j \rangle.$$

Il résulte de (10) que le produit conjugué de deux codes WH est encore un code WH.

Supposons maintenant que les codes utilisés soient des codes de Fourier, définis par : $c_{i,k} = exp(-j\, 2\pi\, ik/N)$. La matrice du code est symétrique.

$$c^*_{k,i}c_{k,j} = c_{k,j-i} \tag{11}$$

où "$j-i$" désigne ici la soustraction modulo N.

Il en résulte là aussi que le produit conjugué de deux codes de Fourier est encore un code de Fourier.

Cette propriété peut être généralisée à une famille de codes obtenus par « rotation » des codes précédents, encore appelés codes tournés, tels que présentés dans l'article de A. Bury et al. intitulé « Diversity comparison of spreading transforms for multi-carrier spread spectrum transmission methods » publié dans Electronic Wireless 2000 Proceedings, Dresden Germany. La matrice d'un code tourné est définie par :

$$C^r = C.\, D(r) \tag{12}$$

où **D** est une matrice diagonale définie par le vecteur $\mathbf{r}=(r_0,..,r_{N-1})^T$ soit $\mathbf{D}=\mathbf{Diag}(r_0,..,r_{N-1})$ où $r_i=exp(j\varphi_i)$.

Il est important de noter que coder $N$ symboles à destination des $N$ utilisateurs au moyen de la matrice d'un code tourné est équivalent à effectuer une rotation de chacun de ces symboles par un angle $\varphi_i$ puis à appliquer la matrice du code initial. Autrement dit, un code tourné d'un code initial peut se ramener au code initial au prix d'une rotation de la constellation pour chacun des utilisateurs.

Si la matrice **C** du code initial est relative à un code de Fourier, alors pour le code de Fourier tourné :

$$c^{r*}_{k,i}c^r_{k,j}=r^*_i.c^*_{k,i}.r_j.c_{k,j}=exp(\varphi_j-\varphi_j).c_{k,j-i}=\lambda_{ij}.c^r_{k,j-i} \tag{13}$$

avec $\lambda_{ij}=\varphi_j-\varphi_i-\varphi_{j-i}$

De même, pour un code de Hadamard tourné :

$$c^{r*}_{k,i}c^r_{k,j}=r^*_i.c_{k,i}.r_j.c_{k,j}=exp(\varphi_j-\varphi_i).c_{k,j \oplus i}=\lambda_{ij}c^r_{k,j \oplus i} \tag{13'}$$

avec $\lambda_{ij}=\varphi_j-\varphi_i-\varphi_{j \oplus i}$

Par la suite, on considérera les codes vérifiant la propriété suivante :

$$c^*_{k,i}c_{k,j}=\lambda_{ij}.c_{k,f(i,j)} \text{ ou } \lambda_{ij}.c^*_{k,f(i,j)} \text{ que l'on notera } \lambda_{ij}.c^{(*)}_{k,f(i,j)} \tag{14}$$

où $f(i,j)$ est un indice dépendant de $i$ et $j$ et décrivant 0 à N-1 à $i$ constant ou à $j$ constant et où $\lambda_{ij}$ est un nombre complexe dépendant en général des indices $i$ et $j$.

Dans ce cas les coefficients $b_{ij}$ de la matrice $\mathbf{B=C^H|H|^2C}$ peuvent s'exprimer par :

$$b_{ij}=\sum_{k=0}^{N-1}|h_k|^2 c_{k,i}^* c_{k,j}=\lambda_{ij}\sum_{k=0}^{N-1}|h_k|^2 c_{k,f(i,j)}^{(*)} \qquad (15)$$

On calcule tout d'abord, par exemple, la première ligne de la matrice $\mathbf{B}$, c'est-à-dire les coefficients $b_{0,j}$, puis on en déduit les autres lignes par une opération de permutation et, le cas échéant, de multiplication :

$$b_{ij}=\frac{\lambda_{ij}}{\lambda_{o,j}}b_{0,\ f_0(f(i,j))}^{(*)\ -1} \text{ où } f_0(k)=f(0,k) \qquad (16)$$

Si l'on dispose d'une table de $f_0^{-1}f$, et, le cas échéant de $\frac{\lambda_{ij}}{\lambda_{o,j}}$, le calcul de la matrice $\mathbf{B}$ ne nécessite que le calcul d'une seule de ses lignes. A titre d'exemple, l'expression (16) s'écrit dans le cas d'un code WH : $b_{ij}=b_{0,i\oplus j}$.

Si l'on utilise par exemple un code WH, un code WH tourné ou encore un code de Fourier, un code de Fourier tourné, la première ligne de la matrice $\mathbf{B}$ peut être avantageusement obtenue par simple transformée du vecteur $\rho=(|h_0|^2,...,|h_{N-1}|^2)^\mathsf{T}$.

En effet, dans le cas d'un code WH, la première ligne est obtenue par transformée de Hadamard de $\rho$:

$$b_{0,j}=\sum_{k=0}^{N-1}|h_k|^2 c_{k,0} c_{k,j}=\sum_{k=0}^{N-1}|h_k|^2 c_{k,0\oplus j}=\sum_{k=0}^{N-1}|h_k|^2 c_{k,j}=\sum_{k=0}^{N-1}c_{j,k}|h_k|^2 \qquad (17)$$

et dans le cas d'un code de Fourier, la première ligne est obtenue par transformée de Fourier de $\rho$:

$$b_{0,j}=\sum_{k=0}^{N-1}|h_k|^2 c_{k,0}^* c_{k,j}=\sum_{k=0}^{N-1}|h_k|^2 c_{k,j-0}=\sum_{k=0}^{N-1}|h_k|^2 c_{k,j}=\sum_{k=0}^{N-1}c_{j,k}|h_k|^2 \qquad (18)$$

Avantageusement, la transformée de Fourier sera effectuée au moyen d'une FFT.

Si des versions tournées de ces codes sont utilisées, les coefficients de la première ligne de $\mathbf{B}$ se déduisent de (17) et (18) au moyen d'une simple multiplication par un coefficient complexe.

Plus généralement, si le code employé vérifie la propriété (14), notamment pour un code de Hadamard, Hadamard tourné, Fourier ou Fourier tourné, on calculera avantageusement une ligne de la matrice $\mathbf{B}$ (ou une colonne puisqu'elle est hermitienne) et on en déduira les autres lignes (respectivement, les autre colonnes) au moyen d'opérations de permutation et le cas échéant de multiplication.

De manière similaire, lorsque la matrice de code $\mathbf{C}$ vérifie la propriété (14) des expressions analogues à (15) et (16) peuvent être obtenues pour $\mathbf{E=C|V|^2C^H}$. Le calcul de la matrice $\mathbf{E}$ ne nécessite alors que celui d'une seule de ses lignes (ou de ses colonnes). En outre, si l'on utilise code WH, un code WH tourné, un code de Fourier, un code de Fourier tourné, une ligne (ou une colonne) de la matrice $\mathbf{E}$ peut être obtenue par simple transformée du vecteur $\pi=(|v_0|^2,...,|v_{N-1}|^2)^\mathsf{T}$ de manière similaire à (17) et (18).

Le calcul par transformée (Hadamard, FFT) d'une ligne (ou une colonne) de la matrice $\mathbf{B}$ ou $\mathbf{E}$ requiert $N\log_2 N$ opérations. Le calcul complet de la matrice $\mathbf{A^H A}$ par l'équation (7) ou de la matrice $\mathbf{AA^H}$ par l'équation (8) requiert $N\log_2 N+2N^2$ opérations. Ceci est à comparer avec les $N^3+3N^2$ opérations que nécessiterait le calcul classique de la matrice $\mathbf{V^H(C^H|H|^2C)V}$ ou $\mathbf{H(C|V|^2C^H)H^H}$.

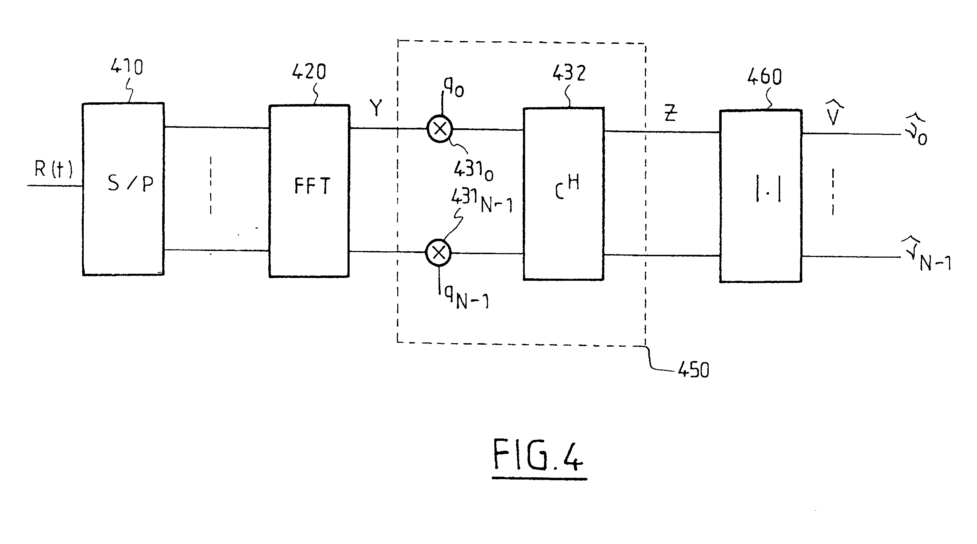

Les niveaux d'émission $v_0,..,v_{N-1}$ figurant dans la matrice $\mathbf{V}$ peuvent être connus du récepteur MC-CDMA. Ce sera par exemple le cas si la station de base les transmet aux récepteurs sur un canal auxiliaire. En revanche, si les niveaux d'émission ne sont pas connus du récepteur, ce dernier peut les estimer, comme nous allons le voir. En effet, la détection mono-utilisateur exposée plus haut en relation avec la Fig. 2 permet d'obtenir une première approximation du niveau d'émission relatif de chaque utilisateur en négligeant l'interférence entre utilisateurs. On applique, en sortie du module de FFT, comme indiqué en Fig. 4, une égalisation porteuse à porteuse grâce aux multiplieurs $431_0,.., 431_{N-1}$, puis on désétale en 432 les signaux au moyen des séquences des différents utilisateurs, pour un obtenir un vecteur de symboles $\mathbf{Z}=(z_0,..,z_{N-1})^T$, soit :

$$Z=C^H QY \tag{19}$$

où $\mathbf{Q}=\mathbf{Diag}(q_0,..,q_{N-1})$ où les $q_i$ sont des coefficients de la méthode d'égalisation choisie MRC, EGC, ZF, MMSE. On a représenté par 450 la combinaison du module d'égalisation et du module de désétalement. L'opération effectuée en 450 est donc une multiplication par la matrice $\mathbf{C}^H\mathbf{Q}$ et sa sortie est le vecteur $\mathbf{Z}$.

On note que si la méthode d'égalisation retenue est la méthode MRC, l'expression (19) s'écrit encore :

$$Z=C^H H^H Y \tag{20}$$

On obtient une estimation des niveaux relatifs d'émission dans le module 460 sous la forme d'un vecteur $\hat{\mathbf{v}}=(\hat{v}_0,..,\hat{v}_{N-1})^T$ tel que :

$$\hat{v}_i=|z_i| \tag{21}$$

si l'on néglige l'interférence et le bruit, et

$$\hat{v}_i = \sqrt{|z_i|^2-\hat{\lambda}^2} \tag{22}$$

si l'on dispose d'une estimation $\hat{\lambda}^2$ de la puissance de l'interférence et du bruit.

Avantageusement, si plusieurs symboles MC-CDMA appartiennent à un même bloc émis avec un même code et à la même puissance, le module 460 peut effectuer un lissage des valeurs $\hat{v}_i$ ou $\hat{v}^2_i$ par un filtre FIR ou IIR. Dans ce dernier cas, aucune latence supplémentaire n'est introduit par le lissage. Si l'on note $\tilde{v}_i(n)$ la sortie du filtre à l'instant $n$ :

$$\tilde{v}_i(n)=\alpha\tilde{v}_i(n-1)+\beta\hat{v}_i(n) \tag{23}$$

et où $\alpha$ et $\beta$ sont les coefficients du filtre. On prendra par exemple $\alpha = 0.9$ et $\beta = 1-\alpha$.

Dans tous les cas, une fois les niveaux relatifs d'émission évalués, on peut estimer la matrice $\mathbf{A}$ par :

$$A=HC\hat{V} \text{ et donc } A^H=\hat{V}^H C^H H^H \tag{24}$$

où $\hat{\mathbf{V}}=\mathbf{Diag}(\hat{v}_0,..,\hat{v}_{N-1})$. Par ailleurs, on estime la matrice $\mathbf{AA}^H$ par $\hat{V}(C|H|^2C^H)\hat{V}^H$ (resp. $\mathbf{A}^H\mathbf{A}$ par $H(C|\hat{V}|^2C^H)H^H$ ) et l'on en déduit $\mathbf{D}$ au moyen de l'équation (5) ou (6).

Avantageusement, on effectuera la détection au moyen de la formule (6) et on utilisera la méthode d'égalisation MRC donnée par (20) dans l'étape préliminaire de détection mono-utilisateur. Ainsi, le résultat de l'égalisation porteuse par porteuse pourra être réutilisé dans l'égalisation GMMSE. En effet, l'équation (6) peut encore s'écrire :

$$\hat{D}=(A^H A+\sigma_b^2.I_N)^{-1}A^H Y=(A^H A+\sigma_b^2.I_N)^{-1}\hat{V}^H C^H H^H Y=(A^H A+\sigma_b^2.I_N)^{-1}\hat{V}^H Z \tag{25}$$

On suppose désormais que les niveaux d'émission $v_0,..,v_{N-1}$ sont connus, qu'ils aient été transmis au récepteur ou estimés par lui au moyen de l'une des formules (21) à (23) comme on vient de le voir.

Selon un mode de réalisation avantageux de l'invention, on ne prend en compte dans le calcul de (5) ou (6) que les codes effectivement utilisés (c'est-à-dire pour les utilisateurs présents) et, parmi ceux-ci, pour un utilisateur donné, seulement ceux interférant significativement avec le code de cet utilisateur.

La détermination des codes les plus interférents peut alors être effectuée selon l'un des critères suivants :

(1) on sélectionne les P-1 (P entier donné tel que P<N) codes $c_m$ distincts de $c_k$ associés aux niveaux $v_m$ les plus

élevés ;

(2) on sélectionne les codes $c_m$ distincts de $c_k$ associés aux niveaux $\nu_m > Th$ où $Th$ est un seuil prédéterminé. Avantageusement, le seuil $Th$ sera adaptatif et dépendra du niveau d'émission pour l'utilisateur considéré. On sélectionnera alors les codes $c_m$ tels que : $\nu_m > \mu.\nu_k$ avec, par exemple, $0 < \mu < 1$. Si le récepteur de l'utilisateur $k$ utilise plusieurs codes d'indices $k_1,..,k_\Delta$ c'est-à-dire si l'utilisateur a établi plusieurs liaisons avec la station de base (le canal d'un utilisateur est alors constitué de plusieurs liaisons), on prendra en compte le code d'indice $k_\delta \in \{k_1,.., k_\Delta\}$ associé au niveau $\nu_{k\delta}$ le plus faible et l'on sélectionnera les codes $c_m$ tels que : $\nu_m > \mu.\nu_{k\delta}$ . Selon une variante, le seuil absolu $Th$ ou relatif $\mu$ peut être choisi en fonction des valeurs de N (longueur des séquences) et P (nombre de codes utilisés), par exemple en fonction du ratio P/N, c'est-à-dire du taux d'utilisation de la ressource, dont dépend l'interférence après démodulation .

Bien entendu une combinaison des critères précédents est également envisageable. En outre, en complément à la sélection à partir des niveaux d'émission, on peut sélectionner parmi ceux retenus selon ce critère, seuls les codes les plus intrinsèquement brouilleurs (c'est-à-dire hormis toute considération de niveau d'émission) pour le code considéré. En effet, on sait, par exemple de l'article de D. Mottier et D. Castelain intitulé 'A spreading sequence allocation procedure for MC-CDMA tansmission systems' publié dans VTC' Fall 2000, Sept. 2000 inclus ici par référence, que, si les coefficients $h_k$ du canal sont corrélés, pour un code d'utilisateur donné, certains codes, à niveau d'émission égal, sont plus brouilleurs que d'autres. Plus précisément, l'interférence entre deux codes $c_i$ et $c_j$ est liée aux propriétés de la séquence « produit conjugué» définie par $w_{ij}$ où $w_{ij}[k]=c_i[k]c*_j[k]$. Nous appellerons par la suite ce critère de sélection le critère de brouillage intrinsèque.

A chaque code $c_i$ on associe un ensemble $E_i$ de codes jugés "non critiques" c'est-à-dire peu interférents. La taille de ces ensembles dépend du niveau d'interférence accepté. Nous supposerons que chaque ensemble $E_i$ contient M éléments.

Selon un mode de réalisation avantageux, les ensembles $E_i$ sont stockés dans une table bi-dimensionnelle: une première entrée correspond à l'index $i$ du code considéré, une deuxième entrée correspond au rang $k$ ($k$ entre 0 et M-1) du code "non critique". La sortie de la table donne les index $j$ des codes, ce que l'on exprime par :

$$j = tab[i,k] \qquad (26)$$

Dans le cas des séquences de WH, une table à une dimension suffit : on peut ne mémoriser que les séquences associés à la séquence 0. En effet, $w_{ij}[k]=c_{i\oplus j}[k]=w_{0,i\oplus j}$ (la séquence produit correspond à un code), si l'on appelle $\mathscr{P}$ la propriété liée à la séquence produit permettant de distinguer un code intrinsèquement peu brouilleur :

$$E_i = \{j, \text{ tel que } w_{ij} = c_i c_j^* \text{ vérifie la propriété } \mathscr{P}\}$$
$$\Rightarrow E_i = \{j, \text{ tel que } w_{0,i\oplus j} = c_0 c_{i\oplus j} \text{ vérifie la propriété } \mathscr{P}\}$$
$$\Rightarrow E_i = \{k\oplus i; w_{0,k} = c_0 c_k^* \text{ vérifie la propriété } \mathscr{P}\}$$
$$\Rightarrow E_i = \{k\oplus i; k\in E_0\} = i\oplus E_0$$

On peut donc générer les indices des codes associés de $E_i$ à partir de ceux de $E_0$ par :

$$j = i\oplus tab[0,k] \qquad (27)$$

Cette propriété se généralise à tout code vérifiant la propriété (14). La relation (26) devient alors :

$$j = f_i^{-1}(tab[0,f_0(k)]) \qquad \text{où } f_i(j) = f(i,j) \qquad (28)$$

En particulier cette propriété s'applique également à un code de Hadamard tourné, à un code de Fourier ou à un code de Fourier tourné.

Le critère de brouillage intrinsèque consiste pour un utilisateur $k$ donné à éliminer dans les codes relatifs aux indices appartenant à $E_k$ et à sélectionner les indices restants.

Il faut noter que la sélection selon le critère de brouillage intrinsèque peut intervenir avant ou après la sélection selon le critère de niveau d'émission.

Comme nous allons le voir, la sélection des codes selon le critère de niveau d'émission, en combinaison éventuelle avec le critère de brouillage intrinsèque, permet à la fois d'améliorer les performances et de diminuer la complexité en réduisant la taille des matrices.

Concernant l'amélioration des performances, on notera en effet que, lorsque les niveaux $v_i$ sont estimés, les codes non utilisés peuvent correspondre à des valeurs de $v_i$ faibles, mais non nulles, qui peuvent perturber le décodage. En revanche, si on élimine un code utilisé dont le niveau émis est faible, les performances n'en seront que très faiblement dégradées.

Concernant la diminution de la taille des matrices, si P codes ont été finalement sélectionnés on peut construire une matrice **V'** de taille PxP obtenue à partir de **V** en éliminant les éléments relatifs aux codes non sélectionnés. On peut supposer, sans perte de généralité que ces codes portent les indices $0,..P-1$, d'où $\mathbf{V'}=\mathbf{Diag}(v_0,..,v_{P-1})$. La matrice **C** peut être également réduite à une matrice **C'** de taille NxP ne comportant que les codes utilisés. Dans ce cas, la matrice **A,** produit des matrices **H,C** et **V** se réduit également à une matrice **A'** de taille NxP : $\mathbf{A'}=\mathbf{HC'V'}$ et le vecteur **Y** s'écrit: $\mathbf{Y}=\mathbf{A'D'}+\mathbf{b}$.

L'estimation des symboles transmis pour les différents utilisateurs se fera alors avantageusement en utilisant les équations réduites, correspondant respectivement à (5) et (6) :

$$\hat{D}'=A'^H(A'A'^H+\sigma_b^2.I_N)^{-1}Y \tag{29}$$

$$\hat{D}'=(A'^HA'+\sigma_b^2.I_P)^{-1}A'^HY \tag{30}$$

On notera que l'équation (29) fait intervenir la matrice $\mathbf{A'A'^H}$ de taille NxN alors que l'équation (30) fait intervenir la matrice $\mathbf{A'^HA'}$ de taille réduite PxP. On utilisera donc de préférence une estimation des symboles selon l'équation (30).

En outre, si l'on a procédé à une estimation des niveaux d'émission au moyen d'une égalisation mono-utilisateur de type MRC, comme exposé plus haut, on dispose déjà du vecteur $\mathbf{Z}=\mathbf{C^HH^HY}$ défini en (20) et l'on peut par conséquent créer un vecteur de taille réduite, **Z'** ne comportant que les composantes correspondant aux code sélectionnés, ici par hypothèse, les P premières composantes. L'estimation des symboles se fait alors de manière similaire à (25)

$$\hat{D}'=(A'^HA'+\sigma_b^2.I_P)^{-1}\hat{V}'^HZ' \tag{31}$$

On peut réécrire l'expression de $\mathbf{A'^HA'}$ apparaissant dans (30) (ou dans (31) si l'on a procédé à une estimation des niveaux d'émission) en observant que **A'** peut encore s'exprimer sous la forme $\mathbf{A'}=(\mathbf{HC})'\mathbf{V'}$ où $(\mathbf{HC})'$ est la réduction de la matrice **HC** à ses P premières colonnes :

$$A'^HA'=V'^H(C^H|H|^2C)'V'=V'^HB'V' \tag{32}$$

On notera que, selon cette expression, on effectue d'abord de calcul de $\mathbf{B}=\mathbf{C^H|H|^2C}$ sur la matrice **C** complète avant de procéder à la réduction de dimension.

On rappelle que les codes de la matrice **C** vérifient la propriété (14), il suffit de calculer une ligne (ou une colonne) de **B**, les autres lignes (ou colonnes) s'en déduisant à partir d'une permutation de ses éléments. En outre, si la matrice **C** est la matrice d'un code de Fourier, Fourier tourné, Hadamard, Hadamard tourné, le calcul d'une ligne (ou d'une colonne) de **B** s'obtient facilement à par transformée du vecteur $\rho$.

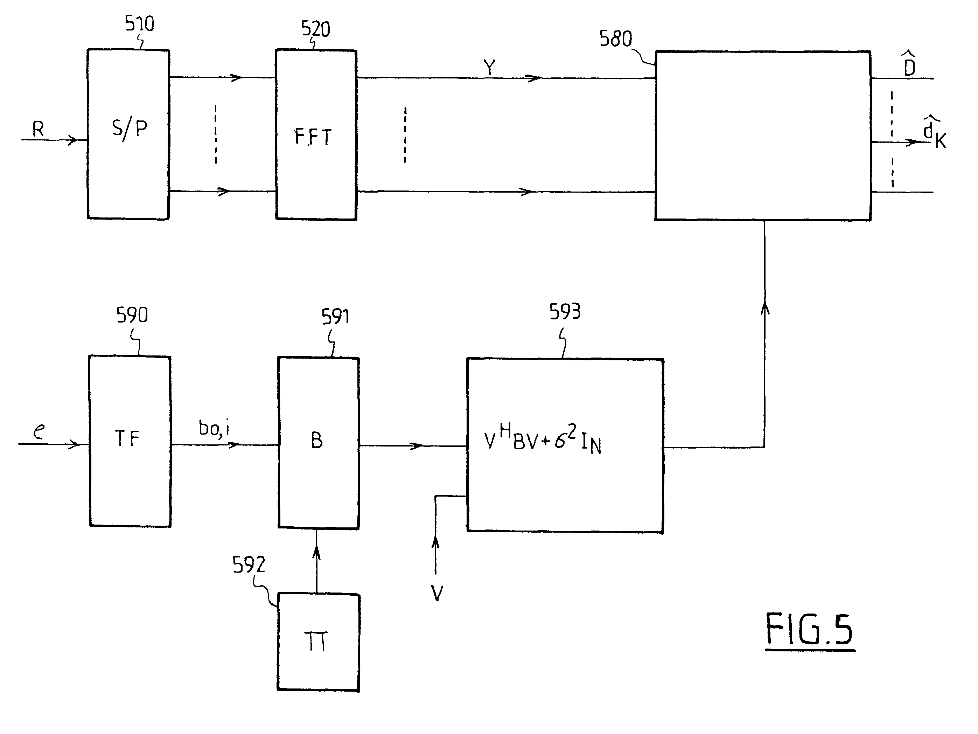

La Fig. 5 illustre un égaliseur GMMSE selon un premier mode de réalisation de l'invention.

On reconnaît les modules 510, 520 identiques aux modules 410 et 420 de la Fig. 4. La sortie du module de FFT 520 est le vecteur **Y**. Le vecteur $\rho$ issu d'un estimateur de canal est soumis en 590 à une transformée (Hadamard, Fourier) correspondant au code utilisé pour fournir la première ligne de la matrice **B.** A partir d'une table 592 donnant la permutation des indices $f_0^{-1}f$, le module 591 génère au moyen de (16) les autres lignes de la matrice **B.** Un module de calcul matriciel 593 reçoit les niveaux d'émission $\mathbf{v}=(v_0,..,v_{N-1})^T$ et calcule la matrice $\Omega=\mathbf{V^HBV}+\sigma_b^2.\mathbf{I_N}$ (équation 6). Le module 580 résout le système linéaire $\Omega\mathbf{D}=\mathbf{A^HY}$ où les valeurs de $d_k$ sont les inconnues.

Selon une variante de réalisation non représentée, le module 590 reçoit le vecteur $\pi$ obtenu à partir des valeurs de niveaux d'émission reçues ou estimées. Le module 590 effectue une transformée (Hadamard, Fourier) correspondant au code utilisé pour fournir la première ligne de la matrice **E**. Le module 591 génère ensuite les autres lignes de la matrice **E** au moyen de la table de permutations 592. La matrice $\Lambda$**=HEH**$^H$**+**$\sigma_b^2$**.I$_N$** est calculée dans le module 593 puis transmise au module 580 qui, dans ce cas, calcule **D=A**$^H$$\Lambda$**$^{-1}$Y.** Selon cette variante le module 593 ne reçoit pas le vecteur **v**.

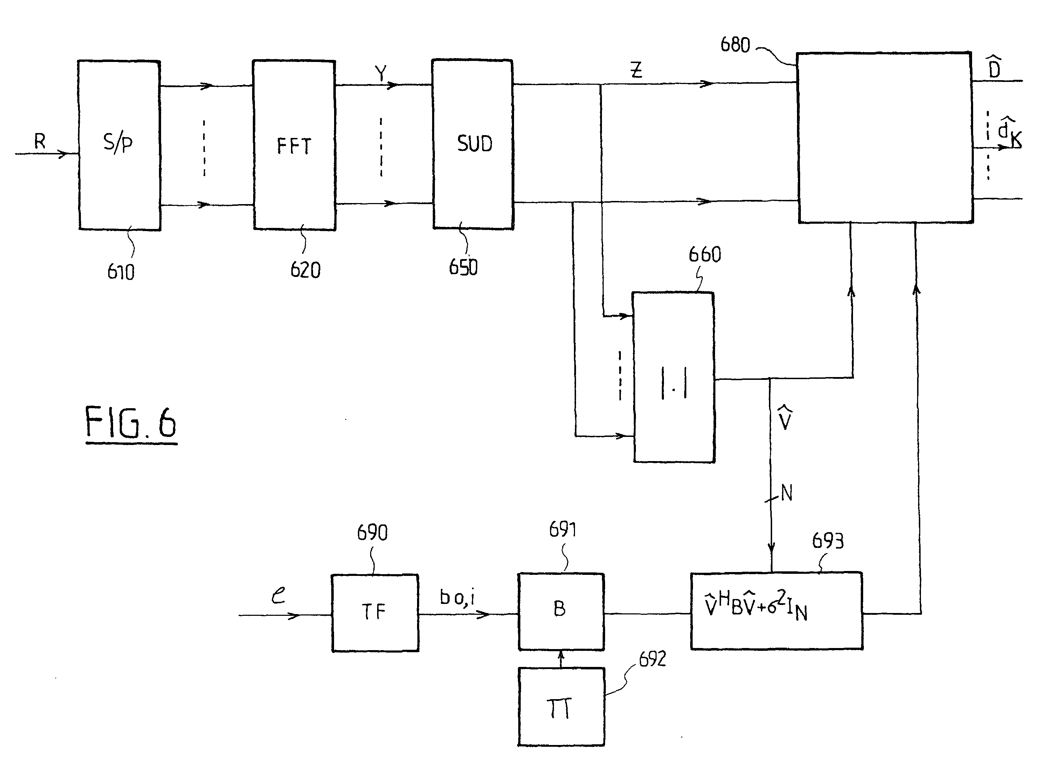

La Fig. 6 illustre un égaliseur GMMSE selon un second mode de réalisation de l'invention avec estimation des niveaux d'émission mais sans réduction de dimension par sélection de codes.

On reconnaît les modules 610, 620, 650, 660 identiques aux modules 410, 420, 450 et 460 de la Fig. 4. Le module 660 fournit une évaluation des niveaux d'émission **v**=( $v_0,..,v_{N-1})^T$ à partir de la sortie **Z** du module de détection mono-utilisateur (650). Le module 650 utilise une égalisation de type MRC. Les modules 690, 691, 692 sont identiques au modules 590, 591, 592. Le module de calcul matriciel reçoit du module 691 la matrice **B** ainsi que le vecteur **v** des niveaux d'émission estimés et effectue le calcul matriciel $\Omega$**=V**$^H$**BV+**$\sigma_b^2$**.I$_N$**. Le module 680 résout le système linéaire $\Omega$**D=A**$^H$**Y** où les valeurs de $d_k$ sont les inconnues.

Selon une variante de réalisation non représentée, le module d'estimation 660 ne transmet pas le vecteur $\hat{\chi}$ des niveaux d'émission estimés au module 693. En revanche, le vecteur $\pi$ est calculé à partir des composantes de **v** puis fourni au module 690. Ce dernier lui applique la transformée correspondant au code, ce qui permet d'obtenir par exemple la première ligne de la matrice $\hat{E}$**=C|V|**$^2$**C**$^H$. Les autres lignes de la matrice sont ensuite générées par 691 à partir de la table des permutations 692. La matrice $\Lambda$**=H$\hat{E}$H**$^H$**+**$\sigma_b^2$**.I$_N$** est calculée dans le module 693 puis transmise au module 680 qui, dans ce cas, calcule **D=A**$^H$$\Lambda$**$^{-1}$Y**.

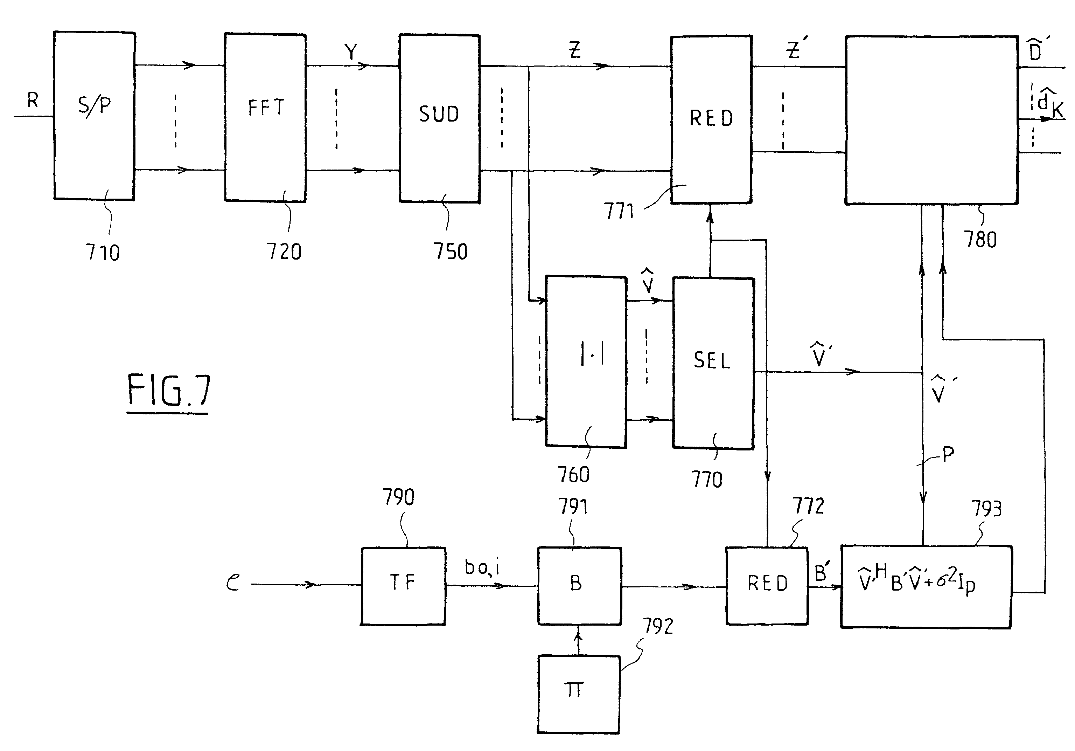

La Fig. 7 illustre un égaliseur GMMSE selon un second mode de réalisation de l'invention, effectuant une évaluation des niveaux d'émission et une réduction de dimension par sélection de codes. Les modules 710, 720, 750, 760 sont identiques aux modules 410, 420, 450 et 460 de la Fig. 4. Les modules 790, 791 et 792 sont identiques aux modules 690, 691et 692 de la Fig. 6. A partir de l'évaluation des niveaux d'émission **v**=$(v_0,..,v_{N-1})^T$ effectuée par le module 760, le module 770 sélectionne les indices des codes les plus interférents et les transmet aux modules 771 et 772. Le module 771 construit le vecteur **Z'** à partir du vecteur **Z**, en ne retenant que les composantes relatives aux indices sélectionnés. De même, le module 772 réduit la matrice **B** de taille NxN à la matrice **B'** de taille PxP en ne retenant que les lignes et colonnes relatives aux indices sélectionnés. Le module de sélection 770 transmet également au module de calcul matriciel 793 ainsi qu'au module 780 les P niveaux d'émission sélectionnés $\chi$**'**=$(v_0,..,v_{P-1})^T$. Ce dernier effectue le calcul $\Omega$**'=V'**$^H$**B'V'+**$\sigma_b^2$**.I$_P$** et le transmet à 780 qui résout le système linéaire $\Omega$**'D=V'**$^H$**Z'** où les valeurs de $d_k$ sont les inconnues.

Bien que le dispositif de réception MC-CDMA utilisant la méthode d'égalisation selon l'invention ait été représenté sous la forme de modules fonctionnels, il va de soi que tout ou partie de ce dispositif peut être réalisé au moyen d'un processeur unique dédié ou programmé pour remplir l'ensemble des fonctions décrites ou encore sous la forme d'une pluralité de processeurs dédiés ou programmés pour remplir chacun une partie desdites fonctions.

Annexe :

Soit **Y=AD+b** un observable à partir duquel on peut estimer le vecteur **D** par filtrage de Wiener. **A** est une matrice carrée de taille NxN. Le vecteur **D** des symboles estimés pour les différents utilisateurs, s'obtient par l'équation de Wiener-Hopf:

$$\hat{D}=R_{DY}R_{YY}^{-1}Y=(R_{DD}A^H)(AR_{DD}A^H+\sigma_b^2.I_N)^{-1}\,Y$$

où **R$_{DY}$, R$_{YY}$, R$_{DD}$** sont respectivement la matrice de covariance de **Y** et **D** et les matrices d'autocovariance de **Y** et de **D**. Si l'on suppose que les symboles transmis sont décorrélés, on a **R$_{DD}$=I$_N$** et donc :

$$\hat{D}=A^H(AA^H+\sigma_b^2.I_N)^{-1}Y$$

Soit **X=A**$^H$**Y,** le résultat du filtrage adapté de **Y :** on sait que **X** est un résumé exhaustif de **Y**. On peut prendre comme observable le vecteur **X** au lieu du vecteur **Y** et estimer le vecteur **D** à partir de ce nouvel observable au moyen d'un filtrage de Wiener. Le vecteur estimé **D** s'écrit alors :

$$\hat{D}=R_{DX}R_{XX}^{-1}X$$

Or

$$R_{DX}=E(DX^H)=E(DY^HA)=(R_{DD}A^H+R_{Db})A=A^HA$$

et de même

$$R_{XX}=A^HAR_{DD}A^HA+A^HR_{bb}A=(AA^H+\sigma_b^2I_N)A^HA$$

d'où

$$\hat{D}=(A^HA+\sigma_b^2I_N)^{-1}X=(A^HA+\sigma_b^2I_N)^{-1}A^HY$$

Si la matrice carrée **A** est remplacée par une matrice rectangulaire **A'** de taille NxP, on obtient de la même façon :

$$\hat{D}=(A'^HA'+\sigma_b^2I_P)^{-1}=(A'^HA'+\sigma_b^2I_P)^{-1}A'^HY$$

## Revendications

1. Méthode d'égalisation pour la voie descendante d'un système de télécommunication transmettant des symboles MC-CDMA sur une pluralité de fréquences porteuses, système dans lequel une pluralité de liaisons est établie entre un émetteur et une pluralité de récepteurs pour transmettre une pluralité de signaux codés, chaque liaison utilisant un code d'accès distinct parmi $N$ codes possibles, le produit conjugué de deux codes possibles étant proportionnel à un code possible ou à son conjugué, ladite méthode, pour au moins un récepteur, comprenant une étape de calcul d'une matrice (**B, E**) caractéristique de ladite pluralité de liaisons, et étant **caractérisée en ce que** ladite étape de calcul calcule d'abord les éléments d'une ligne ou d'une colonne de ladite matrice caractéristique et déduit les autres lignes ou les autres colonnes au moyen d'une permutation desdits éléments.

2. Méthode d'égalisation selon la revendication 1, **caractérisée en ce que** la matrice caractéristique est le produit $\mathbf{E}=\mathbf{C|V|^2C^H}$ où **C** est la matrice des codes possibles, $\mathbf{C^H}$ est la transposée conjuguée de **C**, $\mathbf{V=Diag}(v_0,..,v_{N-1})$ où les coefficients $v_i$ sont les niveaux d'émission, réels ou estimés, des signaux codés au moyen desdits $N$ codes possibles.

3. Méthode d'égalisation selon la revendication 2, **caractérisée en ce qu'**elle comprend une seconde étape de calcul de la matrice $\Lambda=\mathbf{HEH^H}+\sigma_b^2.\mathbf{I_N}$ où $\mathbf{I_N}$ est la matrice unité de taille $NxN$, $\sigma_b^2$ est la variance du bruit, $\mathbf{H=Diag}(h_0,..,h_{N-1})$ où les coefficients $h_i$ caractérisent la réponse du canal de transmission, entre ledit émetteur et ledit récepteur, aux différentes fréquences porteuses.

4. Méthode d'égalisation selon la revendication 3, **caractérisée en ce qu'**elle comprend une troisième étape de calcul de $\mathbf{\hat{D}=A^H\Lambda^{-1}Y}$ où **D** est le vecteur des symboles estimés sur les différentes liaisons, **A=HCV, Y** est le vecteur reçu des composantes d'un symbole MC-CDMA sur les différentes fréquences porteuses.

5. Méthode d'égalisation selon la revendication 1, **caractérisée en ce que** la matrice caractéristique est le produit $\mathbf{B=C^H|H|^2C}$ où **C** est la matrice des codes possibles, $\mathbf{C^H}$ est la transposée conjuguée de **C, H=Diag**$(h_0,..,h_{N-1})$ où les coefficients $h_i$ caractérisent la réponse du canal, entre ledit émetteur et ledit récepteur, aux différentes fréquences porteuses.

6. Méthode d'égalisation selon la revendication 5, **caractérisée en ce qu'**elle comprend une seconde étape de calcul de la matrice $\Omega=\mathbf{V^HBV}+\sigma_b^2.\mathbf{I_N}$ où $\mathbf{I_N}$ est la matrice unité de taille $NxN$, $\sigma_b^2$ est la variance du bruit, $\mathbf{V=Diag}(v_0,..,v_{N-1})$ où les coefficients $v_i$ sont les niveaux d'émission, réels ou estimés, des signaux codés au moyen desdits N codes possibles.

7. Méthode d'égalisation selon la revendication 6, **caractérisée en ce qu'**elle comprend une troisième étape de résolution d'un système d'équations linéaires $\Omega\mathbf{\hat{D}=A^HY}$ où **A=HCV, Y** est le vecteur reçu des composantes d'un symbole MC-CDMA sur les différentes fréquences porteuses et où **D** est le vecteur des symboles estimés sur les différentes liaisons.

**8.** Méthode d'égalisation selon la revendication 5, **caractérisée en ce que** l'on sélectionne (670, 770) à partir les niveaux d'émission, réels ou estimés, des signaux codés au moyen desdits $N$ codes possibles, un sous-ensemble propre de codes parmi les $N$ codes possibles.

**9.** Méthode d'égalisation selon la revendication 8, **caractérisée en ce que** $P$ codes parmi $N$ ayant été sélectionnés, la matrice $\mathbf{V=Diag}(v_0,..,v_{N-1})$ ,où les $v_i$ sont les niveaux estimés ou réels, est réduite à une matrice $\mathbf{V'}$ de taille $PxP$ ne comportant plus que les niveaux associés aux dits codes sélectionnés et que l'étape de calcul de la matrice caractéristique est suivie d'une seconde étape de calcul de la matrice $\Omega\mathbf{'=V'^H B'V'}+\sigma_b^2.\mathbf{I}_P$ où $\mathbf{B'}$ est une matrice de taille $PxP$ obtenue en réduisant $\mathbf{B}$ aux $P$ lignes et $P$ colonnes correspondant aux codes sélectionnés, $\sigma_b^2$ est la variance du bruit sur chaque porteuse et $\mathbf{I_P}$ la matrice unité de taille $PxP$.

**10.** Méthode d'égalisation selon l'une des revendications précédentes, **caractérisée en ce qu'**elle comporte une étape (650, 750) comprenant une égalisation des symboles MC-CDMA porteuse par porteuse du vecteur des composantes d'un symbole MC-CDMA sur les différentes fréquences porteuses et un filtrage adapté à chacun des $N$ codes possibles.

**11.** Méthode d'égalisation selon la revendication 10, **caractérisée en ce que** les niveaux d'émission des signaux codés au moyen desdits $N$ codes possibles sont estimés en effectuant un calcul de module ( 660, 760) en sortie dudit filtrage adapté.

**12.** Méthode d'égalisation selon la revendication 9 et l'une des revendications 10 ou 11, **caractérisée en ce qu'**elle comprend une troisième étape (780) de résolution d'un système d'équations linéaires $\Omega\mathbf{'D'=V'^H Z'}$ où $\mathbf{Z'}$ est la réduction d'un vecteur $\mathbf{Z}$ aux $P$ composantes correspondant aux codes sélectionnés où $\mathbf{Z}$ est le résultat de l'égalisation porteuse par porteuse et où $\mathbf{D'}$ est le vecteur des symboles estimés sur les différentes liaisons utilisant lesdits codes sélectionnés.

**13.** Méthode d'égalisation selon l'une des revendications précédentes, **caractérisée en ce que**, la matrice $\mathbf{C}$ des codes possibles étant une matrice d'un code de Hadamard ou de Hadamard tourné, on calcule (590,690,70) une ligne ou une colonne de la matrice caractéristique grâce à une transformée de Hadamard.

**14.** Méthode d'égalisation selon l'une des revendications 1 à 12, **caractérisée en ce que**, la matrice $\mathbf{C}$ des codes possibles étant une matrice d'un code de Fourier ou de Fourier tourné, on calcule (590,690,70) une ligne ou une colonne de la matrice caractéristique grâce à une FFT.

**15.** Dispositif d'égalisation pour un récepteur dans la voie descendante d'un système de télécommunication transmettant des symboles MC-CDMA sur une pluralité de fréquences porteuse, système dans lequel une pluralité de liaisons est établie entre un émetteur et un récepteur pour transmettre une pluralité de signaux codés, chaque liaison utilisant un code d'accès distinct parmi N codes possibles, le produit conjugué de deux codes possibles étant proportionnel à un code possible ou à son conjugué, ledit dispositif comprenant des moyens qui calculent une matrice (**B, E**) caractéristique de ladite pluralité de liaisons, **caractérisé en ce que** lesdits moyens calculent d'abord les éléments d'une ligne ou d'une colonne de ladite matrice caractéristique et déduisent les autres lignes ou les autres colonnes au moyen d'une permutation desdits éléments.

**16.** Récepteur pour la voie descendante d'un système de télécommunication transmettant des symboles MC-CDMA sur une pluralité de fréquences porteuse, système dans lequel une pluralité de liaisons est établie entre un émetteur et un récepteur pour transmettre une pluralité de signaux codés, chaque liaison utilisant un code d'accès distinct parmi N codes possibles, le produit conjugué de deux codes possibles étant proportionnel à un code possible ou à son conjugué, ledit récepteur comprenant un dispositif d'égalisation contenant des moyens qui calculent une matrice (**B, E**) caractéristique de ladite pluralité de liaisons, **caractérisé en ce que** lesdits moyens calculent d'abord les éléments d'une ligne ou d'une colonne de ladite matrice caractéristique et déduisent les autre lignes ou les autre colonnes au moyen d'une permutation desdits éléments.

**Patentansprüche**

**1.** Entzerrungsmethode für die Abwärtsstrecke eines Fernmeldesystems, das MC-CDMA-Symbole auf einer Vielzahl von Trägerfrequenzen überträgt, wobei bei dem System eine Vielzahl von Verbindungen zwischen einem Sender und einer Vielzahl von Empfängern hergestellt wird, um eine Vielzahl von codierten Signalen zu übertragen, wobei jede Verbindung einen unterschiedlichen Zugriffscode unter N möglichen Codes verwendet, wobei das konjugierte Produkt zweier möglicher Codes zu einem möglichen Code oder seinem zugeordneten Code proportional ist, wobei die Methode für mindestens einen Empfänger einen Schritt zur Berechnung einer Matrix (B, E) umfasst, die für die Vielzahl von Verbindungen charakteristisch ist, wobei der Berechnungsschritt zuerst die Elemente einer Zeile oder einer Spalte der charakteristischen Matrix berechnet und die anderen Zeilen oder die anderen Spalten mit Hilfe einer Permutation dieser Elemente abzieht.

2. Entzerrungsmethode nach Anspruch 1, **dadurch gekennzeichnet, dass** die charakteristische Matrix das Produkt $E=C|V|^2C^H$ ist, wobei C die Matrix der möglichen Codes ist, $C^H$ die konjugierte Transponierte von C ist und $V=\text{Diag}(v_0,...,v_{N-1})$ ist, wobei die Koeffizienten $v_i$ die tatsächlichen oder geschätzten Sendepegel der mit Hilfe der N möglichen Codes codierten Signale sind.

3. Entzerrungsmethode nach Anspruch 2, **dadurch gekennzeichnet, dass** sie einen zweiten Schritt zur Berechnung der Matrix $A=HEH^H + \sigma_b^2 \cdot I_N$ umfasst, wobei $I_N$ die Größeneinheitsmatrix NxN ist, $\sigma_b^2$ die Rauschvarianz ist und $H=\text{Diag}(h_0,...,h_{N-1})$ ist, wobei die Koeffizienten $h_i$ die Reaktion des Übertragungskanals zwischen dem Sender und dem Empfänger auf die verschiedenen Trägerfrequenzen ist.

4. Entzerrungsmethode nach Anspruch 3, **dadurch gekennzeichnet, dass** sie einen dritten Schritt zur Berechnung von $D=A^H\Lambda^{-1}Y$ umfasst, wobei D der Vektor der an den verschiedenen Verbindungen geschätzten Symbole ist, $A=HCV$ gilt und Y der empfangene Vektor von den Komponenten eines MC-CDMA-Symbols auf den verschiedenen Trägerfrequenzen ist.

5. Entzerrungsmethode nach Anspruch 1, **dadurch gekennzeichnet, dass** die charakteristische Matrix das Produkt $B=C^H|H|^2C$ ist, wobei C die Matrix der möglichen Codes ist, $C^H$ die konjugierte Transponierte von C ist und $H=\text{Diag}(h_0,...,h_{N-1})$ ist, wobei die Koeffizienten $h_i$ die Reaktion des Übertragungskanals zwischen dem Sender und dem Empfänger auf die verschiedenen Trägerfrequenzen ist.

6. Entzerrungsmethode nach Anspruch 5, **dadurch gekennzeichnet, dass** sie einen zweiten Schritt der Berechnung der Matrix $\Omega = V^HBV + \sigma_b^2 \cdot I_N$ umfasst, wobei $I_N$ die Größeneinheitsmatrix NxN ist, $\sigma_b^2$ die Rauschvarianz ist und $V=\text{Diag}(v_0,...,v_{N-1})$ ist, wobei die Koeffizienten $v_i$ die tatsächlichen oder geschätzten Sendepegel der mit Hilfe der N möglichen Codes codierten Signale sind.

7. Entzerrungsmethode nach Anspruch 6, **dadurch gekennzeichnet, dass** sie einen dritten Lösungsschritt für ein System von linearen Gleichungen $\Omega D=A^HY$ umfasst, wobei $A=HCV$ gilt, Y der empfangene Vektor von den Komponenten eines MC-CDMA-Symbols auf den verschiedenen Trägerfrequenzen ist und D der Vektor der an den verschiedenen Verbindungen geschätzten Symbole ist.

8. Entzerrungsmethode nach Anspruch 5, **dadurch gekennzeichnet, dass** aus den tatsächlichen oder geschätzten Sendepegeln der mit Hilfe der N möglichen Codes codierten Signale eine eigene Untereinheit von Codes unter den N möglichen Codes ausgewählt wird (670, 770).

9. Entzerrungsmethode nach Anspruch 8, **dadurch gekennzeichnet, dass**, wenn P Codes unter N ausgewählt wurden, die Matrix $V=\text{Diag}(v_0,...,v_{N-1})$, wobei die Koeffizienten $v_i$ die geschätzten oder tatsächlichen Pegel sind, auf eine Matrix V' der Größe PxP reduziert wird, die nur noch die Pegel umfasst die den ausgewählten Codes zugeordnet sind, und dass auf den Schritt der Berechnung der charakteristischen Matrix ein zweiter Schritt der Berechnung der Matrix $\Omega'=V'^HB'V'+\sigma_b^2 \cdot I_P$ folgt, wobei B' eine Matrix der Größe PxP ist, die erhalten wird, indem B auf P Zeilen und P Spalten, die den ausgewählten Codes entsprechen, reduziert wird, $\sigma_b^2$ die Rauschvarianz auf jeder Trägerfrequenz ist und $I_P$ die Größeneinheitsmatrix PxP ist.

10. Entzerrungsmethode nach einem der vorhergehenden Ansprüche, **dadurch gekennzeichnet, dass** sie einen Schritt (650, 750) umfasst, der eine Entzerrung der MC-CDMA-Symbole Trägerfrequenz für Trägerfrequenz des Vektors der Komponenten eines MC-CDMA-Symbols auf den verschiedenen Trägerfrequenzen und eine Filterung umfasst, die an jeden der N möglichen Codes angepasst ist.

11. Entzerrungsmethode nach Anspruch 10, **dadurch gekennzeichnet, dass** die Sendepegel der mit Hilfe der N möglichen Codes codierten Signale geschätzt werden, indem eine Modulberechnung (660, 670) am Ausgang der angepassten Filterung durchgeführt wird.

**12.** Entzerrungsmethode nach Anspruch 9 und 10 oder 11, **dadurch gekennzeichnet, dass** sie einen dritten Schritt (780) zur Lösung eines Systems von linearen Gleichungen $\Omega'D'=V'^HZ'$ umfasst, wobei Z' die Reduktion eines Vektors Z auf die P Komponenten ist, die den ausgewählten Codes entsprechen, wobei Z das Ergebnis der Entzerrung Trägerfrequenz für Trägerfrequenz ist und wobei D' der Vektor der Symbole ist, die an den verschiedenen Verbindungen, die die ausgewählten Codes verwenden, geschätzt wurden.

**13.** Entzerrungsmethode nach einem der vorhergehenden Ansprüche, **dadurch gekennzeichnet, dass**, wenn die Matrix C der möglichen Codes eine Matrix eines Hadamard-Codes oder eines gedrehten Hadamard-Codes ist, eine Zeile oder eine Spalte der charakteristischen Matrix durch eine Hadamard-Transformierte berechnet wird (590, 690, 70).

**14.** Entzerrungsmethode nach einem der Ansprüche 1 bis 12, **dadurch gekennzeichnet, dass**, wenn die Matrix C der möglichen Codes eine Matrix eines Fourier-Codes oder eines gedrehten Fourier-Codes ist, eine Zeile oder eine Spalte der charakteristischen Matrix mit einer FFT berechnet wird (590, 690, 70).

**15.** Entzerrungseinrichtung für einen Empfänger in der Abwärtsstrecke eines Fernmeldesystems, das MC-CDMA-Symbole auf einer Vielzahl von Trägerfrequenzen überträgt, wobei bei diesem System eine Vielzahl von Verbindungen zwischen einem Sender und einem Empfänger hergestellt wird, um eine Vielzahl von codierten Signalen zu übertragen, wobei jede Verbindung einen unterschiedlichen Zugriffscode unter N möglichen Codes verwendet, wobei das konjugierte Produkt zwischen zwei möglichen Codes proportional zu einem möglichen Code oder seinem konjugierten Code ist, wobei die Einrichtung Mittel umfasst, die eine Matrix (B, E) berechnet, die für die Vielzahl von Verbindungen charakteristisch ist, **dadurch gekennzeichnet, dass** die Mittel zuerst die Elemente einer Zeile oder einer Spalte der charakteristischen Matrix berechnen und die anderen Zeilen oder die anderen Spalten mit Hilfe einer Permutation dieser Elemente abziehen.

**16.** Empfänger für die Abwärtsstrecke eines Fernmeldesystems, das MC-CDMA-Symbole auf einer Vielzahl von Trägerfrequenzen überträgt, wobei bei diesem System eine Vielzahl von Verbindungen zwischen einem Sender und einem Empfänger hergestellt wird, um eine Vielzahl von codierten Signalen zu übertragen, wobei jede Verbindung einen unterschiedlichen Zugriffscode unter N möglichen Codes verwendet, wobei das konjugierte Produkt zwischen zwei möglichen Codes proportional zu einem möglichen Code oder seinem konjugierten Code ist, wobei der Empfänger Entzerrungsmittel umfasst, die Mittel enthalten, die eine Matrix (B, E) berechnen, die für die Vielzahl von Verbindungen charakteristisch ist, **dadurch gekennzeichnet, dass** die Mittel zuerst die Elemente einer Zeile oder einer Spalte der charakteristischen Matrix berechnen und die anderen Zeilen oder die anderen Spalten mit Hilfe einer Permutation dieser Elemente abziehen.

**Claims**

**1.** Equalisation method for the downlink channel of a telecommunication system transmitting MC-CDMA symbols on a plurality of carrier frequencies, a system in which a plurality of links is established between a transmitter and a plurality of receivers in order to transmit a plurality of coded signals, each link using a distinct access code among *N* possible codes, the conjugate product of two possible codes being proportional to a possible code or to its conjugate, said method, for at least one receiver, comprising a step of calculating a matrix (B, E) characteristic of said plurality of links, and being **characterised in that** said calculating step first calculates the elements of a line or of a column of said characteristic matrix and deduces the other lines or the other columns by means of a permutation of said elements.

**2.** Equalisation method according to claim 1, **characterised in that** the characteristic matrix is the product $E=C|V|^2C^H$, where C is the matrix of the possible codes, $C^H$ is the conjugate transpose of C, $V=\text{Diag}(\nu_0,..,\nu_{N-1})$, where the coefficients $\nu_i$ are the transmission levels, actual or estimated, of the signals coded by means of said possible *N* codes.

**3.** Equalisation method according to claim 2, **characterised in that** it comprises a second step of calculating the matrix $\Lambda=HEH^H+\sigma_b^2.I_N$, where $I_N$ is the unity matrix of size $N\text{x}N$, $\sigma_b^2$ is the variance of the noise, $H=\text{Diag}(h_0,..,h_{N-1})$, where the coefficients $h_i$ characterise the response of the transmission channel, between said transmitter and said receiver, to the different carrier frequencies.

4. Equalisation method according to claim 3, **characterised in that** it comprises a third step of calculating $\hat{D}=A^H\Lambda^{-1}Y$, where $D$ is the vector of the estimated symbols on the different links, A=HCV, and Y is the received vector of the components of an MC-CDMA symbol on the different carrier frequencies.

5. Equalisation method according to claim 1, **characterised in that** the characteristic matrix is the product $B=C^H|H|^2C$, where C is the matrix of the possible codes, $C^H$ is the conjugate transpose of C, $H=\text{Diag}(h_0,..,h_{N-1})$, where the coefficients $h_i$ characterise the response of the channel, between said transmitter and said receiver, to the different carrier frequencies.

6. Equalisation method according to claim 5, **characterised in that** it comprises a second step of calculating the matrix $\Omega=V^HBV+\sigma_b^2.I_N$, where $I_N$ is the unity matrix of size $NxN$, $\sigma_b^2$ is the variance of the noise, $V=\text{Diag}(v_0,..,v_{N-1})$, where the coefficients $v_i$ are the transmission levels, actual or estimated, of the signals coded by means of said $N$ possible codes.

7. Equalisation method according to claim 6, **characterised in that** it comprises a third step of solving a system of linear equations $\Omega D=A^HY$, where A=HCV, Y is the received vector of the components of an MC-CDMA symbol on the different carrier frequencies and where $D$ is the vector of the estimated symbols on the different links.

8. Equalisation method according to claim 5, **characterised in that** an appropriate sub-assembly of codes among the $N$ possible codes is selected (670, 770) from the transmission levels, actual or estimated, of the signals coded by means of said $N$ possible codes.

9. Equalisation method according to claim 8, **characterised in that** $P$ codes among $N$ having been selected, the matrix $V=\text{Diag}(v_0,..,v_{N-1})$, where $v_i$ are the estimated or actual levels, is reduced to a matrix V' of size $PxP$ now only comprising the levels associated with said selected codes, and **in that** the step of calculating the characteristic matrix is followed by a second step of calculating the matrix $\Omega'=V'^HB'V'+\sigma_b^2.I_P$, where B' is a matrix of size $PxP$ obtained by reducing B to the $P$ lines and $P$ columns corresponding to the selected codes, $\sigma_b^2$ being the variance of the noise on each carrier, and $I_P$ being the unity matrix of size $PxP$.

10. Equalisation method according to one of the preceding claims, **characterised in that** it comprises a step (650, 750) comprising an equalisation of the MC-CDMA symbols carrier by carrier of the vector of the components of an MC-CDMA symbol on the different carrier frequencies and a filtering means adapted to each of the $N$ possible codes.

11. Equalisation method according to claim 10, **characterised in that** the transmission levels of the signals coded by means of said $N$ possible codes are estimated by carrying out a module calculation (660, 760) at the output of said adapted filtering means.

12. Equalisation method according to claim 9 and one of claims 10 or 11, **characterised in that** it comprises a third step (780) of solving a system of linear equations $\Omega'D'=V'^HZ'$, where Z' is the reduction of a vector Z to the P components corresponding to the selected codes where Z is the result of the equalisation carrier by carrier, and where $D'$ is the vector of the estimated symbols on the different links using said selected codes.

13. Equalisation method according to one of the preceding claims, **characterised in that**, the matrix C of the possible codes being a matrix of a Hadamard or rotated Hadamard code, a line or a column of the characteristic matrix is calculated (590, 690, 70), thanks to a Hadamard transform.

14. Equalisation method according to one of claims 1 to 12, **characterised in that**, the matrix C of the possible codes being a matrix of a Fourier or rotated Fourier code, a line or a column of the characteristic matrix is calculated (590, 690, 70) thanks to an FFT.

15. Equalisation apparatus for a receiver in the downlink channel of a telecommunication system transmitting MC-CDMA symbols on a plurality of carrier frequencies, a system in which a plurality of links is established between a transmitter and a receiver in order to transmit a plurality of coded signals, each link using a distinct access code among N possible codes, the conjugate product of two possible codes being proportional to a possible code or to its conjugate, said apparatus comprising means which calculate a matrix (B, E) characteristic of said plurality of links, **characterised in that** said means first calculate the elements of a line or of a column of said characteristic matrix and deduce the other lines or the other columns by means of a permutation of said elements.

**16.** Receiver for the downlink channel of a telecommunication system transmitting MC-CDMA symbols on a plurality of carrier frequencies, a system in which a plurality of links is established between a transmitter and a receiver in order to transmit a plurality of coded signals, each link using a distinct access code among N possible codes, the conjugate product of two possible codes being proportional to a possible code or to its conjugate, said receiver comprising an equalisation apparatus containing means which calculate a matrix (B, E) characteristic of said plurality of links, **characterised in that** said means first calculate the elements of a line or of a column of said characteristic matrix and deduce the other lines or the other columns by means of a permutation of said elements.

$d_k(i)$

$110$

$c_k(t-iT)$

$120$

S/P

$130$

IFFT

$140$

P/S

$150$

$-f_k$

$S_k^{(f)}$

FIG.1

FIG.2

FIG.3

FIG.4

FIG.5

FIG.6

FIG.7

EP 1 244 242 B1